# EUROPEAN PATENT APPLICATION

(11) **EP 4 273 388 A1**
(43) Date of publication of application: **08.11.2023**
(21) Application number: 23170211.9
(22) Date of filing: 26.04.2023
(51) Int. Cl.: F02C 7/236

(54) **AIRCRAFT FUEL PUMPING SYSTEM**

(30) Priority: 06.05.2022 US 202217738141
(71) Applicant: Hamilton Sundstrand Corporation, Charlotte, NC 28217-4578 (US)
(72) Inventor: STOICESCU, Adrian L., Roscoe (US); LABODA, Donna, Roscoe (US); GOY, Edward W., Crystal Lake (US); LEDUC, Zachary Allen Ray, Rockford (US); HAUGSJAAHABINK, Todd, Springfield (US); KASSEL, John M., Huntley (US)
(74) Representative: Dehns

(57) **Abstract**

A fuel pumping system (110) of an aircraft, having a first boost pump (120A); a main pump (120B); a main pump feed conduit (124B) fluidly coupled to the main pump (120B) and configured to receive fuel after it has passed through the first boost pump (120A); a main pump discharge conduit (125B) fluidly coupled to the main pump (120B); an ejector (210) fluidly coupled to the main pump feed conduit (124B), between the first boost pump (120A) and the main pump (120B); a bypass conduit (125C) fluidly coupled to the main pump discharge conduit (125B) and the ejector (210) such that the bypass conduit (125C) is configured to provide fluid to the ejector (210) drawn from the output of the first boost pump (120A) into the main pump (120B); and a backpressure regulating valve (200) fluidly coupled to the bypass conduit (125C), and configured to transition to an open state when pressure in the main pump discharge conduit (125B) is above a threshold.

## Description

### BACKGROUND

The embodiments herein relate to aircraft systems and more specifically to an aircraft fuel pumping system.

Aircrafts may dispose of heat generated by a variety of electronic and mechanical systems into fuel that is sent through a pumping system to the engine burners. An engine fuel pumping system should be configured so that minimal mechanical energy is added to fuel that flows through the pumping system while increasing the fuel pressure to meet downstream requirements.

### BRIEF SUMMARY

According to an aspect of the invention, a fuel pumping system of an aircraft is disclosed, including a first boost pump; a main pump; a main pump feed conduit that is fluidly coupled to the main pump and that is configured to receive fuel after it has passed through the first boost pump; a main pump discharge conduit that is fluidly coupled to the main pump; an ejector that is fluidly coupled to the main pump feed conduit, between the first boost pump and the main pump; a bypass conduit that is fluidly coupled to the main pump discharge conduit and the ejector such that the bypass conduit is configured to provide fluid to the ejector drawn from the output of the first boost pump into the main pump; and a backpressure regulating valve that is fluidly coupled to the bypass conduit, and configured to transition to an open state when pressure in the main pump discharge conduit is above a threshold.

In addition to one or more above disclosed aspects of the system or as an alternate, a first segment of the main pump feed conduit extends between the first boost pump and the ejector, and a second of the main pump feed conduit extends between the ejector and the main pump; and the ejector includes a high pressure port fluidly coupled to the bypass conduit; a low pressure port fluidly coupled to the first segment of the main pump feed; and a discharge port fluidly coupled to the second segment of the main pump feed.

In addition to one or more above disclosed aspects of the system or as an alternate, the system includes a heat exchanger and a filter that are fluidly coupled to the main pump feed conduit between the first boost pump and the ejector.

In addition to one or more above disclosed aspects of the system or as an alternate, the system includes a pump drive, operationally coupled to the main pump and the first boost pump.

In addition to one or more above disclosed aspects of the system or as an alternate, the system includes a second boost pump; and a boost pump connector conduit that fluidly couples the first and second boost pumps; wherein the main pump feed conduit fluidly couples the downstream boost pump and the main pump.

In addition to one or more above disclosed aspects of the system or as an alternate, a first segment of the main pump feed conduit extends between the second boost pump and the ejector, and a second of the main pump feed conduit extends between the ejector and the main pump; and the ejector includes a high pressure port fluidly coupled to the bypass conduit; a low pressure port fluidly coupled to the first segment of the main pump feed; and a discharge port fluidly coupled to the second segment of the main pump feed.

In addition to one or more above disclosed aspects of the system or as an alternate, the system includes a heat exchanger and a filter that are fluidly coupled to the boost pump connector conduit.

In addition to one or more above disclosed aspects of the system or as an alternate, the system includes a pump drive that is operationally coupled to the main pump and the boost pumps.

According to an aspect of the invention, an aircraft is disclosed including a fuel reservoir; a gas turbine engine that includes an engine component; and a fuel pumping system having one or more of the above disclosed aspects.

In addition to one or more above disclosed aspects of the aircraft or as an alternate, the engine component is a fuel metering unit.

In addition to one or more above disclosed aspects of the aircraft or as an alternate, the aircraft includes a heat exchanger and a filter that are fluidly coupled to the main pump feed conduit between the first boost pump and the ejector.

In addition to one or more above disclosed aspects of the aircraft or as an alternate, the aircraft includes a pump drive that is operationally coupled to the main pump and the first boost pump.

In addition to one or more above disclosed aspects of the aircraft or as an alternate, the aircraft includes a second boost; and a boost pump connector conduit that fluidly couples the first and second boost pumps; wherein the main pump feed conduit fluidly couples the downstream boost pump and the main pump.

In addition to one or more above disclosed aspects of the aircraft or as an alternate, the aircraft includes a heat exchanger and a filter that are fluidly coupled to the boost pump connector conduit.

In addition to one or more above disclosed aspects of the aircraft or as an alternate, the aircraft includes a pump drive that is operationally coupled to the main pump and the boost pumps.

### BRIEF DESCRIPTION OF THE DRAWINGS

The present disclosure is illustrated by way of example and not limited in the accompanying figures in which like reference numerals indicate similar elements.
FIG. 1 shows a fuel pumping system of an aircraft according to an embodiment; and
FIG. 2 shows a fuel pumping system of an aircraft according to another embodiment.

### DETAILED DESCRIPTION

A detailed description of one or more embodiments of the disclosed apparatus and method are presented herein by way of exemplification and not limitation with reference to the Figures.

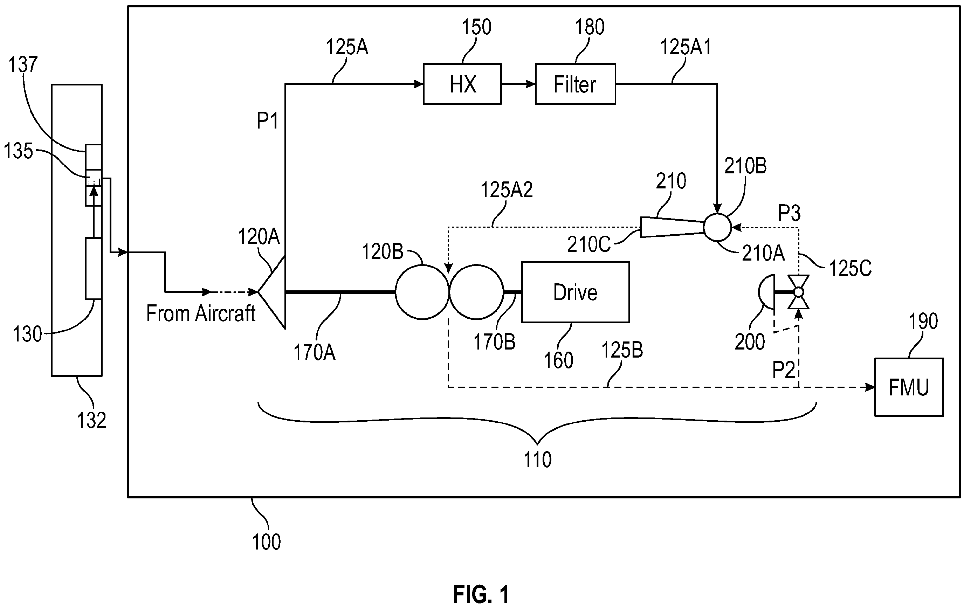

Turning to FIG. 1, a gas turbine engine 100 may include an engine fuel pumping system 110 that may have pumps, generally referenced as 120, that serve specific functions such as delivering burner flow, actuation flow, or after burner flow. The pumping system 110 receives fuel from the fuel system 130 of the aircraft 132 (i.e., an airplane), such as a fuel reservoir or tank, e.g., within a wing. The fuel may be heated based on absorbing heat via a heat exchanger 135 from electronic and mechanical systems or components 137 of the aircraft 132, i.e., located upstream of the pumping system 110.

As shown in FIG. 1, the system 110 includes at least two pumps, a low pressure boost pump 120A and a main pump 120B.

Fuel received by the pumping system 110 is first provided to the first boost pump 120A that pressurizes the fuel to a first pressure P1. In one embodiment, P1 is at least above a minimum pressure required for the main pump 120B. After being pressurized the fuel is provided to a heat exchanger 150 via a main pump feed conduit 125A. The heat exchanger 150 may be a fuel/oil cooler (FOC). The heat exchanger 150 may extract some of the heat energy transferred into the fuel upstream of the pumping system 110.

The first boost pump 120A may be a centrifugal pump such as a centrifugal impeller, or a regenerative wheel, driven by a pump drive 160, which may be an engine mounted accessory drive (EMAD) (which takes mechanical power from the engine shaft and drives various accessories on the engine including fuel pumps) or motor, as nonlimiting examples, connected to both pumps 120 via respective shafts 170A, 170B. The fuel flows from the heat exchanger 150, through a fuel pump filter element 180, and then to the high pressure main stage, i.e., the main pump 120B.

The main pump 120B is a positive displacement pump that increases the fuel pressure to a second pressure P2, which is greater than P1, and sends it to an engine component 190 via a main pump discharge conduit 125B. The engine component 190 is a fuel metering unit (FMU) in one embodiment.

Within the engine component 190, the fuel may be metered and utilized for combustion. That is, the fuel may be directed to fuel injector nozzles and sprayed into the engine for combustion by the combustor burners.

The main pump 120B raises the pressure to levels required by the engine component 190, e.g., to spray out of the nozzles, and the engine burners. The main pump 120B may also supply motive flow to engine fuel driven actuators utilized to set and hold compressor guide vanes at predetermined positions.

A backpressure regulating valve 200 regulates pressure out of the main pump 120B by opening (e.g., transitioning to an open state) at a threshold third pressure P3, which is less than P2, and flow at a pressure above P3 may be throttled back to main pump 120B via a bypass conduit 125C. Being that P3 is less than P2 during normal operation of the main pump 120B, a certain amount of high pressure flow is normally throttled back to mix with low pressure flow directed to the main pump 120B. This reduces the continual load requirements of the main pump 120B. In addition, the backpressure regulating valve 200 prevents the occurrence of an overpressure condition in the engine component 190.

At takeoff, the pumping system 110 is required to deliver high fuel pressure to the engine, and such pressure may reach the capability limits of the positive displacement pumps, in particular that of the main pump 120B. For this reason, an ejector 210 is provided where in the main pump bypass conduit 125C connects with the main pump feed conduit 124B.

The ejector 210 has three connection ports. A high pressure port 210A, which receives fuel from the bypass conduit 125C. A low pressure port 210B, which receives fuel from the main pump feed conduit 125A, downstream of the first boost pump 120A (i.e., upstream of the ejector 210). A discharge port 210C, which directs fuel toward the main pump 120B.

The ejector divides the main pump feed conduit 125A into first and second segments 125A1, 125A2. The first segment 125A1 is an ejector suction conduit 125A1, which extends between the ejector 210 and the boost pump 120A. The second segment 125A2 is an ejector discharge conduit 125A2, which extends between the ejector 210 and the main pump 120B. The ejector 210 is designed to mix the two incoming streams by converting the pressure energy of the high pressure fluid into kinetic energy. The ejector 210 has a venturi shape towards its discharge end that defines a diffuser. This shape slows the outlet flow from the ejector 210, to increase its pressure. This enables the ejector 210 to discharge flow at a pressure that is greater than that of the low pressure branch (e.g., conduit 125A), though at a pressure that is lower than the high pressure branch. The ejector 210 is thus capable of compressing or boosting the pressure of the entrained fluid. That is, the ejector 210 transfers energy from one flow stream to another in a direct mixing process. In the disclosed embodiments, the ejector 210 recovers energy from the output of the backpressure regulating valve 200 and utilizes it to increase the pressure into the main pump 120B.

As a non-limiting illustrative example of a utilization of the pumping system 110, the main pump 120B may be required to provide a fuel pressure P2 of 1000 PSIG and the backpressure regulating valve 200 may be configured open at 500 PSIG. Without the ejector 210, the first boost pump 120A may be required to output up to 200 PSIG in order for the main pump 120B to have enough inlet pressure to achieve the required outlet pressure. However, such pressures may overtax the heat exchanger 150 and filter element 180 due to their mechanical limitations. With the ejector 210, the first boost pump 120A may be made smaller, e.g., providing 50 PSIG, with output from the ejector 210 reaching 200 PSIG. This reduces the energy footprint of the pumping system 110. Similarly, the main pump 120B may also be made smaller, depending on its inlet pressure due to the utilization of the ejector 210. This may further reduce the energy footprint of the pumping system 110.

As can be appreciated, the arrangement of the pumping system 110 has various benefits. For example, it provides a direct energy saving, which improves the TMS (thermal energy management) footprint of the pumping system 110. In addition, it extends the range of high pressure that the pumping system 110 can deliver to the engine burners beyond what otherwise would occur without the ejector 210.

The ejector 210 is designed to operate optimally when it experiences high flows at its high pressure port and low flows at its low pressure port. For a pumping system 110, efficient operation at idle and cruise is important due to the long durations spent at these conditions during flight. During idle and cruise conditions, bypass recirculation is highest, which results in relatively low flows at the ejector low pressure port and relatively high flows at the ejector high pressure port. Thus, the ejector 210 will operate optimally at idle and cruise, resulting in the pumping system 110 also operating optimally. In these flight segments, the ejector 210 recovers energy from the output of the main pump 120B, which otherwise would be lost by throttling via the backpressure regulating valve 200, and that energy is utilized to boost the pressure into the main pump 120B. As a result, the configuration of the embodiment shown in FIG. 1 extends the pressure range of the pumping system 110 and reduces its TMS footprint.

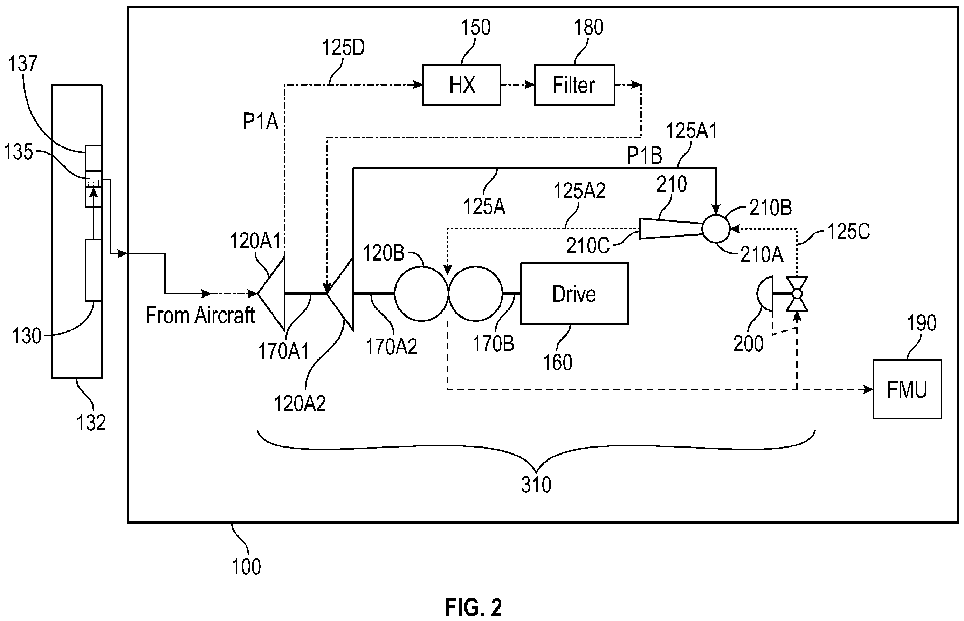

Turning to FIG. 2, similar to FIG. 1, a gas turbine engine 100 may include an engine fuel pumping system 310 according to another embodiment that may have pumps, generally referenced as 120, that serve specific functions such as delivering burner flow, actuation flow, or after burner flow. The pumping system 310 receives fuel from the fuel system 130 of the aircraft 132 (i.e., an airplane), such as a fuel reservoir or tank, e.g., within a wing. The fuel may be heated based on absorbing heat via a heat exchanger 135 from electronic and mechanical systems or components 137 of the aircraft 132, i.e., located upstream of the pumping system 310.

As shown in FIG. 2, the system 310 includes at least three pumps, an upstream low pressure boost pump 120A1, a downstream low pressure boost pump 120A2 (first and second boost pumps), and a main pump 120B that is downstream of the downstream boost pump 120A2.

Fuel received by the pumping system 310 is first provided to the first boost pump 120A1 that pressurizes the fuel to a first pressure P1A. In one embodiment, P1A may be a minimum pressure required for the main pump 120B, though it may be lower for the embodiment in FIG. 2. After being initially pressurized the fuel is provided to a heat exchanger 150 via a boost pump connector conduit 125D. The heat exchanger 150 may be a fuel/oil cooler (FOC). The heat exchanger 150 may extract some of the heat energy transferred into the fuel upstream of the pumping system 310. The fuel then reaches the second boost pump 120A2 where it is pressurized further to pressure P1B and provided to the main pump feed conduit 125A toward the high pressure main stage, i.e., the main pump 120B.

The boost pumps 120A1, 120A2 may each be a centrifugal pump such as a centrifugal impeller, or a regenerative wheel, driven by a pump drive 160, which may be an engine mounted accessory drive (EMAD) or motor, as nonlimiting examples, connected to each of the pumps 120 via respective shafts 170A1, 170A2, 170B.

The main pump 120B is a positive displacement pump that increases the fuel pressure to a second pressure P2, which is greater than P1B, and sends it to an engine component 190 via a main pump discharge conduit 125B. The engine component is a fuel metering unit (FMU) in one embodiment.

Within the engine component 190, the fuel may be metered and utilized for combustion. That is, the fuel may be directed to fuel injector nozzles and sprayed into the engine for combustion by the combustor burners.

The main pump 120B raises the pressure to levels required by the engine component 190, e.g., to spray out of the nozzles, and the engine burners. The main pump 120B may also supply motive flow to engine fuel driven actuators utilized to set and hold compressor guide vanes at predetermined positions.

A backpressure regulating valve 200 regulates pressure out of the main pump 120B by opening (e.g., transitioning to an open state) at a threshold third pressure P3, which is less than P2, and flow at a pressure above P3 may be throttled back to main pump 120B via a bypass conduit 125C. Being that P3 is less than P2 during normal operation of the main pump 120B, a certain amount of high pressure flow is normally throttled back to mix with low pressure flow directed to the main pump 120B. This reduces the continual load requirements of the main pump 120B. In addition, the backpressure regulating valve 200 prevents the occurrence of an overpressure condition in the engine component 190.

At takeoff, the pumping system 310 is required to deliver high fuel pressure to the engine, and such pressure may reach the capability limits of the positive displacement pumps, in particular that of the main pump 120B. For this reason, an ejector 210 is provided where in the main pump bypass conduit 125C connects with the main pump feed conduit 124B.

The ejector 210 has three connection ports. A high pressure port 210A, which receives fuel from the bypass conduit 125C. A low pressure port 210B, which receives fuel from the main pump feed conduit 125A, downstream of the second boost pump 120A2 (i.e., upstream of the ejector 210). A discharge port 210C, which directs fuel toward the main pump 120B.

The ejector divides the main pump feed conduit 125A into first and second segments 125A1, 125A2. The first segment 125A1 is an ejector suction conduit 125A1, which extends between the ejector 210 and the second boost pump 120A. The second segment 125A2 is an ejector discharge conduit 125A2, which extends between the ejector 210 and the main pump 120B. The ejector 210 is designed to mix the two incoming streams by converting the pressure energy of the high pressure fluid into kinetic energy. The ejector 210 has a venturi shape towards its discharge end that defines a diffuser. This shape slows the outlet flow from the ejector 210, to increase its pressure. This enables the ejector 210 to discharge flow at a pressure that is greater than that of the low pressure branches upstream of it, though at a pressure that is lower than the high pressure branch. The ejector 210 is thus capable of compressing or boosting the pressure of the entrained fluid. That is, the ejector 210 transfers energy from one flow stream to another in a direct mixing process. In the disclosed embodiments, the ejector 210 recovers energy from the output of the backpressure regulating valve 200 and utilizes it to increase the pressure into the main pump 120B.

The embodiment of FIG. 2, as can be appreciated, has the same pressure-boosting benefits as the embodiment of FIG. 1 due to the use of the ejector 210. In addition, in the embodiment of FIG. 2, without the heat exchanger 150 and filter element 180 on the main pump feed conduit 125A, the downstream boost pump 120A2 may be configured to provide greater boost pressure, such as bringing the fuel to 300 PSIG, further reducing the pumping requirements of the main pump 120B. Alternatively, a greater output pressure may be obtained via the main pump 120B due to the higher pressure into it. That is utilizing two or more boost pumps 120 improves the efficiency of the boost pumps 120, which allows for extending the fuel system pressure range. This configuration provides a solution for keeping the mechanical rating of the heat exchanger 150 and filter element 180, which are interstage components in FIG. 2, at acceptable limits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A fuel pumping system of an aircraft, comprising:
a first boost pump;
a main pump;
a main pump feed conduit that is fluidly coupled to the main pump and that is configured to receive fuel after it has passed through the first boost pump;
a main pump discharge conduit that is fluidly coupled to the main pump;
an ejector that is fluidly coupled to the main pump feed conduit, between the first boost pump and the main pump;
a bypass conduit that is fluidly coupled to the main pump discharge conduit and the ejector such that the bypass conduit is configured to provide fluid to the ejector drawn from the output of the first boost pump into the main pump; and
a backpressure regulating valve that is fluidly coupled to the bypass conduit, and configured to transition to an open state when pressure in the main pump discharge conduit is above a threshold.

2. The system of claim 1, wherein:
a first segment of the main pump feed conduit extends between the first boost pump and the ejector, and a second segment of the main pump feed conduit extends between the ejector and the main pump; and
the ejector includes:
a high pressure port fluidly coupled to the bypass conduit;
a low pressure port fluidly coupled to the first segment of the main pump feed; and
a discharge port fluidly coupled to the second segment of the main pump feed.

3. The system of claim 1 or 2, further comprising:
a heat exchanger and a filter that are fluidly coupled to the main pump feed conduit between the first boost pump and the ejector.

4. The system of any preceding claim, further comprising:
a pump drive, operationally coupled to the main pump and the first boost pump.

5. The system of any preceding claim, further comprising:
a second boost pump; and
a boost pump connector conduit that fluidly couples the first and second boost pumps;
wherein the main pump feed conduit fluidly couples the downstream boost pump and the main pump.

6. The system of claim 5, wherein:
a first segment of the main pump feed conduit extends between the second boost pump and the ejector, and a second segment of the main pump feed conduit extends between the ejector and the main pump; and
the ejector includes:
a high pressure port fluidly coupled to the bypass conduit;
a low pressure port fluidly coupled to the first segment of the main pump feed; and
a discharge port fluidly coupled to the second segment of the main pump feed.

7. The system of claim 5 or 6, further comprising:
a heat exchanger and a filter that are fluidly coupled to the boost pump connector conduit.

8. The system of any of claims 5 to 7, further comprising:
a pump drive that is operationally coupled to the main pump and the boost pumps.

9. An aircraft comprising:
a fuel reservoir;
a gas turbine engine that includes an engine component; and
a fuel pumping system as recited in claim 1.

10. The aircraft of claim 9, wherein:
the engine component is a fuel metering unit.

11. The aircraft of claim 9 or 10, further comprising:
a heat exchanger and a filter that are fluidly coupled to the main pump feed conduit between the first boost pump and the ejector.

12. The aircraft of any of claims 9 to 11, further comprising:
a pump drive that is operationally coupled to the main pump and the first boost pump.

13. The aircraft of any of claims 9 to 11, further comprising:
a second boost; and
a boost pump connector conduit that fluidly couples the first and second boost pumps;
wherein the main pump feed conduit fluidly couples the downstream boost pump and the main pump.

14. The aircraft of claim 13, further comprising:
a heat exchanger and a filter that are fluidly coupled to the boost pump connector conduit.

15. The aircraft of claim 13 or 14, further comprising:
a pump drive that is operationally coupled to the main pump and the boost pumps.
